# EUROPEAN PATENT APPLICATION

(11) **EP 1 770 805 A2**
(43) Date of publication of application: **04.04.2007**
(21) Application number: 06019469.3
(22) Date of filing: 18.09.2006
(51) Int. Cl.: H01M 8/00, H01M 8/04, F24D 17/00

(54) **Apparatus for controlling operation of fuel cell system and method thereof**

(30) Priority: 28.09.2005 KR 20050090827
(71) Applicant: LG Electronics Inc., Yongdungpo-gu Seoul (KR); LG Chem, Ltd., Yongdungpo-Gu Seoul (KR)
(72) Inventor: Ko, Seung-Tae, Seoul (KR); Choi, Hong, Anyang Gyeonggi-Do (KR)
(74) Representative: Urner, Peter

(57) **Abstract**

An apparatus for controlling operation of a fuel cell system and a method thereof. The apparatus comprises a power generation amount controlling unit for generating a user's heat usage pattern and outputting a power generation amount controlling signal for controlling a power generation amount of a fuel cell based on the generated user's heat usage pattern, and a power generation command generating unit for applying a power generation command corresponding to the power generation amount controlling signal outputted from the power generation amount controlling unit to the fuel cell.

## Description

### BACKGROUND OF THE INVENTION

### 1. Field of the Invention

The present invention relates to a fuel cell system, and more particularly, to an apparatus for controlling operation of a fuel cell system capable of applying a user's heat usage pattern to a power generation for a fuel cell, and a method thereof.

### 2. Description of the Background Art

Generally, a fuel cell system serves to directly convert fuel energy into electric energy. The fuel cell system is provided with an anode and a cathode at both sides of a high molecule electrolyte membrane. As a fuel of hydrogen is electrochemically oxidized at the anode and oxygen is electrochemically deoxidized at the cathode, electrons are generated. The fuel cell system generates electric energy as the generated electrons move.

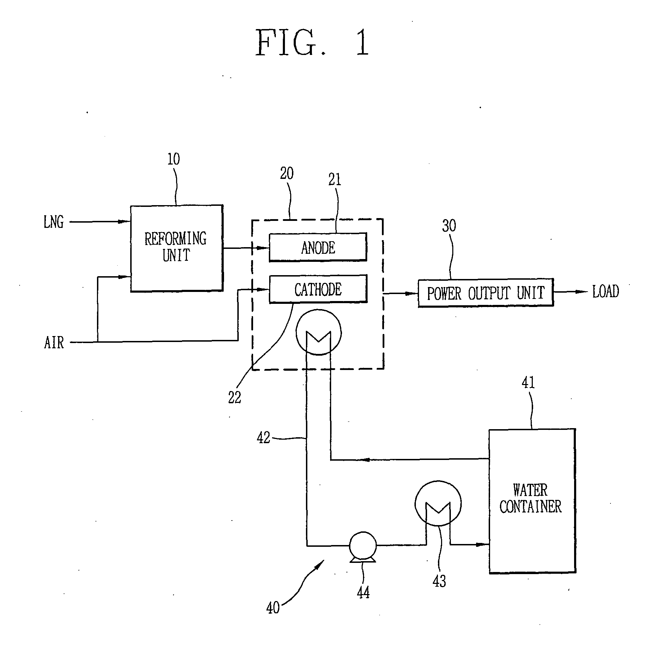

FIG. 1 is a diagram showing a proton exchange membrane fuel cell (PEMFC), in which a hydrocarbon-based fuel such as LNG, LPG, CH30H, etc. (LNG in drawing) undergoes a desulfurization process, a reforming process, and a hydrogen refining process in a reformer, so that only hydrogen is refined thus to be used as a fuel.

As shown in FIG. 1, the conventional fuel cell system comprises a reforming unit 10 for refining hydrogen from LNG; a stack unit 20 connected to the reforming unit 10 and having an anode 21 to which refined hydrogen is supplied and a cathode 22 to which air is supplied, for generating electric power and heat by electrochemically reacting hydrogen and air; a power output unit 30 connected to an outlet of the stack unit 20 for supplying power to a load; a heat exchange unit 40 for cooling the reforming unit 10 and the stack unit 20 by respectively supplying water thereto; and a controller (not shown) electrically connected to each of the units and controlling an operation of each unit.

The heat exchange unit 40 comprises a water container 41 for containing a certain amount of water, a cooling water line 42 connected between the water container 41 and the stack unit 20 for transmitting cooling water to the stack unit 20, a heat emission unit 43 installed in the middle of the cooling water line 42 for cooling water recollected to the water container 41 from the stack unit 20, and a circulation pump 44 installed in the middle of the cooling water line 42 for pumping water inside the water container 41 and supplying the pumped water to the stack unit 20.

An operation of the conventional fuel cell system will be explained.

First, a hydrocarbon-based fuel is refined in the reforming unit 10, thereby refining hydrogen. The refined hydrogen is supplied to the anode 21 of the stack unit 20.

The reforming unit 10 supplies air to the cathode 22 of the stack unit 20.

An oxidation is performed in the anode 21 of the stack unit and a deoxidation is performed in the cathode 22 of the stack unit 20.

While the oxidation and the deoxidation are performed, electrons are generated. As the generated electrons move to the cathode 22 from the anode 21, power is generated. The generated power is converted into an alternating current by the power output unit 30, and then is supplied to each kind of electric product.

The stack unit 20 simultaneously generates power and heat. Accordingly, water contained in the water container 41 is supplied to the stack unit 20 through the cooling water line 42 by the circulation pump 44 of the heat exchange unit 40, and the water supplied to the stack unit 20 is recollected in the water container 41. As the water supplying process and the water recollecting process are repeatedly performed, the stack unit 20 is cooled.

The conventional fuel cell system was controlled by a method proposed by the Japanese Matsushita.

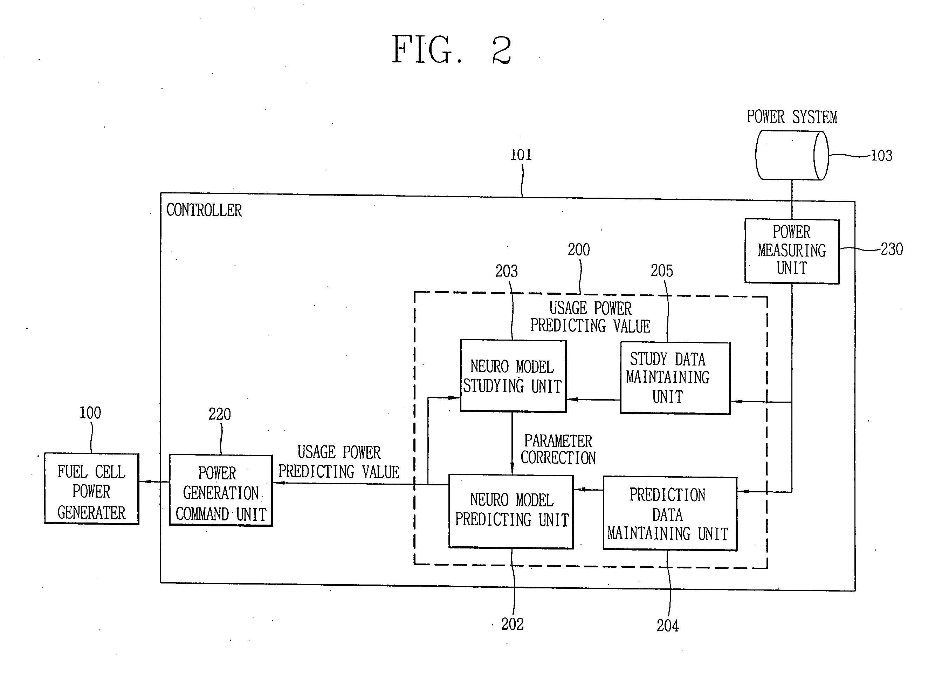

FIG. 2 is a block diagram showing a construction of an apparatus for controlling operation of a fuel cell system in accordance with the conventional art.

As shown in FIG. 2, the conventional apparatus for controlling operation of a fuel cell system comprises a power measuring unit 230, a usage power predicting unit 200, a power generation command unit 220, and a fuel cell power generator 100.

The power measuring unit 230 measures an amount of power detected by a power system 103.

The usage power predicting unit 200 stores an amount of power measured by the power measuring unit 230, generates a user's power pattern by using the stored power information, and generates a usage power prediction value.

The usage power predicting unit 200 comprises a study data maintaining unit 205, a neuro model studying unit 203, a neuro model predicting unit 202, and a prediction data maintaining unit 204.

The power generation command unit 220 applies a command corresponding to a usage power prediction value outputted from the usage power predicting unit 200 to the fuel cell power generator 100, and the fuel cell power generator 100 generates power on the basis of the received command.

In the conventional apparatus for controlling operation of a fuel cell system, a user's power usage amount is predicted and a power generation command is applied on the basis of the predicted information.

However, when the conventional method is applied to a fuel cell system in summer or in a hot region, an electric power efficiency is more lowered than a heat efficiency.

For instance, whereas the electric power efficiency is 35%, the heat efficiency is 50% in summer or in a hot region.

### BRIEF DESCRIPTION OF THE INVENTION

Therefore, an object of the present invention is to provide an apparatus for controlling operation of a fuel cell system capable of enhancing an efficiency of a fuel cell system by storing water amount data and water temperature data detected for a certain time, generating a user's heat usage pattern on the basis of the data, and applying the user's heat usage pattern to a power generation of a fuel cell, and a method thereof.

To achieve these and other advantages and in accordance with the purpose of the present invention, as embodied and broadly described herein, there is provided an apparatus for controlling operation of a fuel cell system, comprising: a power generation amount controlling unit for generating a user's heat usage pattern and outputting a power generation amount controlling signal for controlling a power generation amount of a fuel cell based on the generated user's heat usage pattern; and a power generation command generating unit for applying a power generation command corresponding to the power generation amount controlling signal outputted from the power generation amount controlling unit to the fuel cell.

According to another embodiment, there is provided an apparatus for controlling operation of a fuel cell system, comprising: a water amount detecting unit installed at a hot water heating line for detecting water amount data; a temperature detecting unit installed at the hot water heating line for detecting water temperature data; a power generation amount controlling unit for generating a user's heat usage pattern based on the water amount data and the water temperature data and outputting a power generation amount controlling signal for controlling a power generation amount of a fuel cell on the basis of the generated user's heat usage pattern; and a power generation command generating unit for applying a power generation command corresponding to the power generation amount controlling signal outputted from the power generation amount controlling unit to the fuel cell.

To achieve these and other advantages and in accordance with the purpose of the present invention, as embodied and broadly described herein, there is also provided a method for controlling operation of a fuel cell system, comprising: detecting water amount data and water temperature data; generating a user's heat usage pattern on the basis of the detected water amount data and the water temperature data; and reading a power generation amount based on the user's heat usage pattern and thereby controlling a power generation amount of a fuel cell.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a diagram showing a fuel cell system in accordance with the conventional art;
FIG. 2 is a block diagram showing a construction of an apparatus for controlling operation of the fuel cell system in accordance with the conventional art;
FIG. 3 is a block diagram showing a construction of an apparatus for controlling operation of a fuel cell system according to the present invention; and
FIG. 4 is a flow chart showing processes for controlling operation of a fuel cell system according to the present invention.

### DETAILED DESCRIPTION OF THE INVENTION

Reference will now be made in detail to the preferred embodiments of the present invention, examples of which are illustrated in the accompanying drawings.

Hereinafter, an apparatus for controlling operation of a fuel cell system capable of enhancing an efficiency of a fuel cell system by storing water amount data and water temperature data detected for a certain time, generating a user's heat usage pattern on the basis of the data, and applying the user's heat usage pattern to a power generation of a fuel cell, and a method thereof will be explained in more detail with reference to the attached drawings.

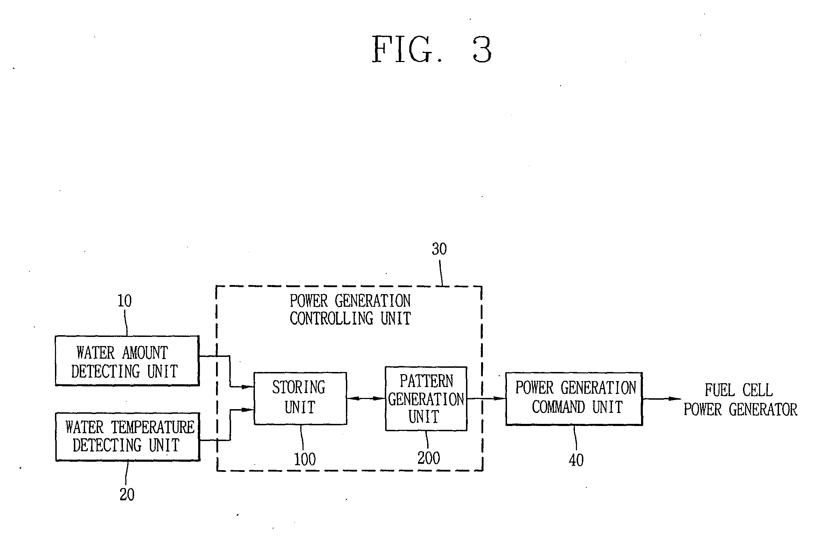

FIG. 3 is a block diagram showing a construction of an apparatus for controlling operation of a fuel cell system according to the present invention.

As shown in FIG. 3, an apparatus for controlling operation of a fuel cell system according to the present invention comprises a water amount detecting unit 10, a water temperature detecting unit 20, a power generation amount controlling unit 30, and a power generation command generating unit 40.

The water amount detecting unit 10 is installed at a hot water heating line thus to detect water amount data, and the temperature detecting unit 20 is installed at the heating warm water thus to detect water temperature data.

The power generation amount controlling unit 30 generates a user's heat usage pattern based on the water amount data and the water temperature data, and outputs a power generation amount controlling signal for controlling a power generation amount of a fuel cell based on the generated user's heat usage pattern.

The power generation amount controlling unit 30 comprises a storing unit 100, a pattern generating unit 200, and a power generation amount reading unit 300.

The storing unit 100 stores water amount data, water temperature data, a reference heat usage pattern according to season/date/time, and a power generation amount corresponding to the reference heat usage pattern.

As one example, the reference heat usage pattern according to season/date/time can be generated by a manufacturer by an experiment in a manufacturing process.

As another example, the reference heat usage pattern according to season/date/time can be generated by a user on the basis of water amount data and water temperature data accumulated for a certain time.

The pattern generating unit 200 generates a user's heat usage pattern on the basis of the water amount data and the water temperature data.

The power generation amount reading unit 300 compares the user's heat usage pattern with the reference heat usage pattern stored in the storing unit 100, and reads a power generation amount according to the comparison result.

If the user's heat usage pattern is consistent with the reference heat usage pattern, the power generation amount reading unit 300 reads a power generation amount corresponding to the reference heat usage pattern.

If the user's heat usage pattern is not consistent with the reference heat usage pattern, the power generation amount reading unit 300 reads a power generation amount corresponding to the user's heat usage pattern.

The power generation command generating unit 40 applies a power generation command corresponding to the power generation amount controlling signal outputted from the power generation amount controlling unit 30 to the fuel cell system.

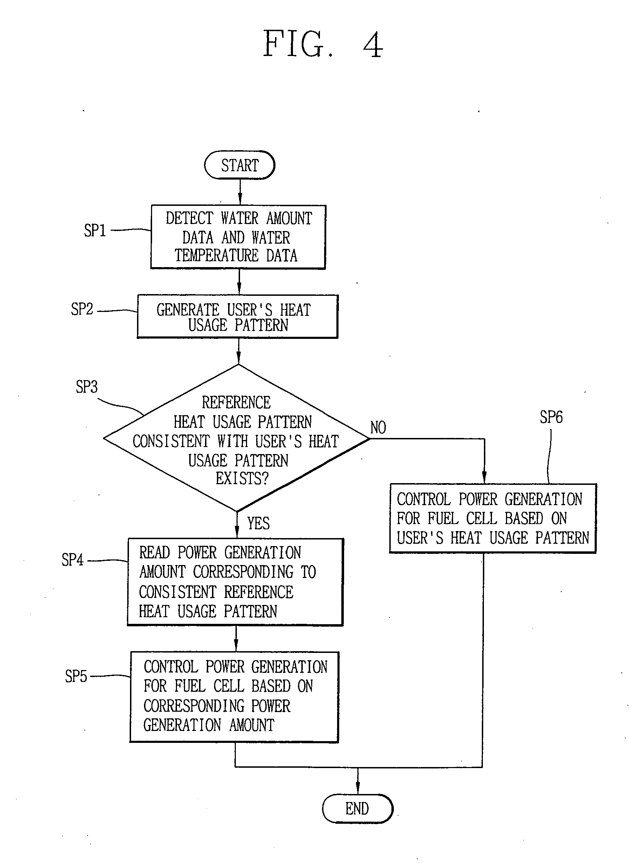

An operation of the apparatus for controlling operation of a fuel cell system according to the present invention will be explained with reference to FIG. 4.

First, the storing unit 100 stores water amount data, water temperature data, a plurality of reference heat usage patterns according to season/date/time, and a power generation amount corresponding to the plural reference heat usage patterns.

As one example, the plural reference heat usage patterns according to season/date/time can be generated by a manufacturer by an experiment in a manufacturing process.

As another example, the plural reference heat usage patterns according to season/date/time can be generated by a user on the basis of water amount data and water temperature data accumulated for a certain time.

Then, the water amount detecting unit 10 detects water amount data, and the water temperature detecting unit 20 detects water temperature data (SP1).

Then, the pattern generating unit 200 analyzes the water amount data and the water temperature data accumulated for a certain time, and generates a user's heat usage pattern on the basis of the analyzed result (SP2).

The power generation amount controlling unit 30 compares the user's heat usage pattern with the plural reference heat usage patterns stored in the storing unit 100, and controls a power generation amount according to the comparison result (SP3 to SP6).

More concretely, if the user's heat usage pattern is consistent with one of the plural reference heat usage patterns (SP3), the power generation amount controlling unit 30 reads a power generation amount corresponding to the consistent reference heat usage pattern (SP4) and controls a power generation of the fuel cell based on the read power generation amount (SP5).

On the contrary, if the user's heat usage pattern is not consistent with the reference heat usage patterns, the power generation amount controlling unit 30 controls a power generation amount of the fuel cell based on the user's heat usage pattern (SP6).

In the apparatus for controlling operation of a fuel cell system and the method thereof according to the present invention, heat usage data accumulated for a certain time is detected thus to be stored, a user's heat usage pattern is generated on the basis of the stored data, and the generated user's heat usage pattern is applied to a power generation of the fuel cell. Accordingly, an efficiency of the fuel cell system of the present invention can be enhanced.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalents of such metes and bounds are therefore intended to be embraced by the appended claims.

## Claims

1. An apparatus for controlling operation of a fuel cell system, comprising:
a power generation amount controlling unit for generating a user's heat usage pattern and outputting a power generation amount controlling signal for controlling a power generation amount of a fuel cell based on the generated user's heat usage pattern; and
a power generation command generating unit for applying a power generation command corresponding to the power generation amount controlling signal outputted from the power generation amount controlling unit to the fuel cell.

2. The apparatus of claim 1, wherein the power generation amount controlling unit generates a user's heat usage pattern based on water amount data and water temperature data detected for a certain time.

3. The apparatus of claim 1, wherein the power generation amount controlling unit comprises:
a storing unit for storing water amount data, water temperature data, a plurality of reference heat usage patterns according to season/date/time, and a power generation amount corresponding to each of the plural reference heat usage patterns;
a pattern generating unit for generating a user's heat usage pattern on the basis of the water amount data and the water temperature data; and
a power generation amount reading unit for comparing the user's heat usage pattern generated from the pattern generating unit with the plural reference heat usage patterns stored in the storing unit, and reading a power generation amount according to the comparison result.

4. An apparatus for controlling operation of a fuel cell system, comprising:
a water amount detecting unit installed at a hot water heating line for detecting water amount data;
a water temperature detecting unit installed at the hot water heating line for detecting water temperature data;
a power generation amount controlling unit for generating a user's heat usage pattern and outputting a power generation amount controlling signal for controlling a power generation amount of a fuel cell on the basis of the generated user's heat usage pattern; and
a power generation command generating unit for applying a power generation command corresponding to the power generation amount controlling signal outputted from the power generation amount controlling unit to the fuel cell.

5. The apparatus of claim 4, wherein the power generation amount controlling unit comprises:
a storing unit for storing water amount data, water temperature data, a plurality of reference heat usage patterns according to season/date/time, and a power generation amount corresponding to each of the plural reference heat usage patterns;
a pattern generating unit for generating a user's heat usage pattern on the basis of the water amount data and the water temperature data; and
a power generation amount reading unit for comparing the user's heat usage pattern generated from the pattern generating unit with the plural reference heat usage patterns stored in the storing unit, and reading a power generation amount according to the comparison result.

6. The apparatus of claim 5, wherein if the user's heat usage pattern is consistent with one of the reference heat usage patterns, the power generation amount reading unit reads a power generation amount corresponding to the consistent reference heat usage pattern.

7. The apparatus of claim 5, wherein if the user's heat usage pattern is not consistent with the reference heat usage patterns, the power generation amount reading unit reads a power generation amount corresponding to the user's heat usage pattern.

8. The apparatus of claim 5, wherein the reference heat usage pattern according to season/date/time is generated by a manufacturer by an experiment in a manufacturing process.

9. The apparatus of claim 5, wherein the reference heat usage pattern according to season/date/time is generated by a user on the basis of water amount data and water temperature data accumulated for a certain time.

10. A method for controlling operation of a fuel cell system, comprising:
detecting water amount data and water temperature data;
generating a user's heat usage pattern on the basis of the detected water amount data and the water temperature data; and
reading a power generation amount based on the user's heat usage pattern and thereby controlling a power generation amount of a fuel cell.

11. The method of claim 10, wherein the step of controlling a power generation amount comprises:
comparing the user's heat usage pattern with the plural reference heat usage patterns; and
if the user's heat usage pattern is consistent with one of the reference heat usage patterns, reading a power generation amount corresponding to the consistent reference heat usage pattern by the power generation amount reading unit.

12. The method of claim 11, further comprising controlling a power generation amount of a fuel cell on the basis of the user's heat usage pattern if the user's heat usage pattern is not consistent with the reference heat usage patterns.

13. The method of claim 10, further comprising:
storing a plurality of reference heat usage patterns according to season/date/time on the basis of water amount data and water temperature data accumulated for a certain time; and
storing power generation amount corresponding to each of the plural reference heat usage patterns.

14. The method of claim 13, wherein the plural reference heat usage patterns according to season/date/time are generated by a manufacturer by an experiment in a manufacturing process.

15. The method of claim 13, wherein the plural reference heat usage patterns according to season/date/time are generated by a user on the basis of the water amount data and water temperature data accumulated for a certain time.
